# NOUVEAU FASCICULE DE BREVET EUROPEEN

(11) **EP 1 912 515 B3**
(45) Date de publication du présent fascicule: **01.05.2019**
(45) Mention de la délivrance du brevet: 19.05.2010
(21) Numéro de dépôt: 06794304.3
(22) Date de dépôt: 07.08.2006
(51) Int. Cl.: A23G 1/40, A23G 1/36, A23G 1/50, A23G 1/56

(54) **FOURRAGE GRAS OU IMITATION DE CHOCOLAT POUR PRODUITS DE CUISSON CEREALIERS**
BUTTERFETTFÜLLUNG ODER KÜNSTLICHE SCHOKOLADE FÜR GETREIDEBACKPRODUKTE
BUTTERFAT FILLING OR IMITATION CHOCOLATE FOR CEREAL COOKING PRODUCTS

(30) Priorité: 10.08.2005 FR 0508499
(43) Date de publication de la demande: 23.04.2008
(73) Titulaire: Intercontinental Great Brands LLC, East Hanover, NJ 07936 (US)
(72) Inventeur: RABAULT, Jean-Luc, F-78730 Ponthevrard (FR); BELOUIN, François, F-91590 Cerny (FR)
(74) Mandataire: Boult Wade Tennant LLP
(86) Numéro de dépôt international: PCT/FR2006/001918
(87) Numéro de publication internationale: WO 2007/017593

(56) Documents cités:
- EP-A- 0 547 658
- EP-A- 0 584 835
- DE-A- 19 650 106
- GB-A- 993 308
- US-A- 4 587 131
- US-A1- 2004 228 957

## Description

La présente invention concerne produit de cuisson céréalier sec comprenant un fourrage gras ou une imitation de chocolat à teneur en matières grasses et/ ou en sucres réduite. Au sens de l'invention les produits de cuisson céréaliers comprennent aussi les barres céréalières et leur Humidité Relative d'Equilibre (H.R.E.) est inférieure à 80%.

US-A-4 587 131 décrit une émulsion eau-dans-l'huile comprenant 20...90 % d'une phase grasse continue et 1...25 % de particules d'amidons, les pourcentages étant exprimés en poids pour poids, 80...100 % des particules comportant un diamètre de moins de 25 µm (revendications, colonne 1, ligne 25-colonne 2, ligne 37, exemples). Aussi le document D1 décrit le fait que l'amidon est de l'amidon de blé, de riz. La suspension contient aussi un émulsifiant, comme la lécithine.

EP-A-0 547 658 décrit un fourrage comprenant 5-50 % de matière grasse et le reste contient 10...60 % d'eau et 90...40 % d'un agent épaississant comme l'amidon de maïs, pomme de terre, tapioca (revendications, page 2, ligne 18-page 4, ligne 12). De préférence le fourrage contient 5...40 % de la matière grasse et plus préférentiellement 10...30% de matière grasse (page 2, lignes 46-48). Les particules de l'agent épaississant ont une taille de 0.1...50 µm (revendication 13), de préférence 1...20 µm (page 4, lignes 52-54). Le fourrage contient aussi un émulsifiant et des sucres comme le sucrose, des arômes et du sel (page 3, ligne 48-page 4, ligne 5).

GB 993 308 décrit un produit alimentaire dans la forme d'un sandwich de 2 ou plusieurs biscuits et une couche de fourrage gras comprenant une matière grasse et de l'amidon (revendications, exemples, page 1, ligne 39-page 2, ligne 19).

La réduction de la teneur en matières grasses (MG) et en sucres dans les produits alimentaires, tout en conservant leurs propriétés organoleptiques et leur texture, est un défi majeur de l'industrie agroalimentaire. Notamment dans le domaine des biscuits secs avec fourrage gras la réduction de la teneur en matière grasse et en sucres s'avère difficile. Cependant, une telle réduction est très désirable pour la lutte contre l'obésité.

Les fourrages gras pour biscuits secs contiennent de la matière grasse pour contrôler la texture et la tartinabilité (mise en forme en usine). La matière grasse permet au fourrage d'adhérer au biscuit et elle apporte du fondant au fourrage. Une fois fondue dans la bouche, la matière grasse assure une bonne fluidité et évite un produit trop pâteux. La teneur en matières grasses classique est de 31 % à 40 % MG, typiquement de 33 % à 37 % MG. Lorsque la teneur en matières grasses est réduite, les fourrages deviennent plus durs et adhèrent moins facilement au biscuit ; en bouche, le biscuit fourré est alors moins fondant et plus pâteux.

Un fourrage classique saveur chocolat contient typiquement environ 35 % en poids de matières grasses, environ 12 % en poids de poudre de cacao dégraissée, le reste de la formulation étant constitué par du saccharose. Un fourrage simple saveur vanille contient traditionnellement environ 35 % en poids de matières grasses, environ 65 % en poids de saccharose et de la vanilline.

La teneur en sucres de ces fourrages est classiquement de 49 % à 65 %. Il est connu de remplacer le saccharose par d'autres mono- ou disaccharides afin d'abaisser le prix ou d'ajuster la saveur sucrée, tels que le dextrose, le lactose ou le lactosérum (qui contient environ 75% de lactose). Cependant, une telle substitution n'améliore pas vraiment l'aspect nutritionnel du fourrage.

D'autres substituts du saccharose, qui présentent une bonne saveur sucrée et qui fondent en bouche sont les polyols. Toutefois, les polyols présentent l'inconvénient d'être chers, laxatifs et d'être des additifs alimentaires.

On connaît également d'autres substituts du saccharose qui n'ont pas de saveur sucrée marquée. Ce sont par exemple le polydextrose (qui coûte cher et qui est aussi un additif alimentaire), ou certains sirops de glucose de bas DE et les maltodextrines (qui contiennent cependant une certaine proportion de mono- et disaccharides et qui sont rapidement digestibles, et qui sont aussi assez collants en bouche).

Dans le cas des chocolats ou des imitations de chocolat, la question de la réduction de la teneur en matières grasses et/ou de la teneur en sucres se pose de la même façon que pour les fourrages gras.

Habituellement, une réduction de la teneur en matières grasses est liée à une augmentation de la teneur en sucres et inversement, une réduction en sucres est généralement liée à une augmentation de la teneur en matières grasses. De telles réductions n'améliorent évidemment pas l'équilibre nutritionnel du produit concerné.

Un but de la présente invention est donc de pallier tout ou partie des inconvénients de l'art antérieur.

A cette fin, la présente invention propose un produit de cuisson céréalier sec comprenant un fourrage gras ou une imitation de chocolat, en particulier pour les produits de cuisson céréaliers, constitué(e) d'une suspension de particules solides dans une phase grasse continue, ladite suspension comprenant de 24 à 29% de matières grasses (MG) et de 3 % à 40 % d'au moins un amidon natif et non surséché, ces pourcentages étant exprimés en poids pour poids.

Le fourrage gras mis en oeuvre dans le produit de cuisson céréalier sec selon l'invention peut être un fourrage sucré, tel qu'un fourrage saveur chocolat, vanille, lait, caramel, café, noisette, menthe ou fruit ou un fourrage salé, tel que fromage, viande, poisson, épices, légumes.

Une imitation de chocolat au sens de la présente invention présente une texture identique et une saveur très proche ou quasi-identique à un chocolat traditionnel. Cependant, à la différence de ce dernier, elle peut contenir d'autres ingrédients qui selon la Directive communautaire 2000/36 /CE ne sont pas autorisés dans un chocolat. Par exemple, les matières grasses utilisées peuvent être principalement des matières grasses végétales autres que le beurre de cacao. Les imitations de chocolat peuvent être des imitations de chocolat au lait, noir ou blanc. Il va de soit que des ingrédients aromatiques et/ou colorants tels que par exemple fruits secs du type noix, noisettes, fruits séchés du type fraise, ou du caramel peuvent être ajoutés à ces imitations de chocolats.

Le terme « produit de cuisson céréalier » tel qu'utilisé dans la présente demande comprend les biscuits secs, les gaufrettes, les biscottes, les barres de céréales.

Au sens de la présente demande, le terme « sucres » au pluriel désigne les mono- et disaccharides apportés seuls ou via des ingrédients en contenant (le lait écrémé en poudre apporte par exemple 52% de lactose).

Dans les fourrages gras ou imitations de chocolat mis en oeuvre dans le produit de cuisson céréalier sec selon la présente invention, la granulométrie des particules (définie par le D90 au granulomètre laser Malvern Mastersizer 2000, c'est-à-dire le diamètre en dessous duquel se trouve 90% du volume de toutes les particules) est comprise entre 20 µm et 200 µm, de préférence entre 20 µm et 150 µm, et plus préférentiellement encore entre 35 µm et 120 µm. Pour un fourrage gras, la granulométrie des particules est avantageusement comprise entre 40 µm et 200 µm, de préférence entre 70 µm et 150 µm et plus préférentiellement encore entre 70 et 120 µm ; pour une imitation de chocolat entre 20 µm et 200 µm, de préférence entre 20 µm et 80 µm, et plus préférentiellement encore entre 25 µm et 50 µm.

La Demanderesse a eu le mérite de trouver qu'il était possible de remplacer une partie importante des sucres traditionnellement présents dans les fourrages gras ou les imitations de chocolat par de l'amidon natif sans altérer la saveur sucrée du produit. Cet ajout d'amidon permet aussi de réduire sensiblement la teneur en matières grasses des fourrages gras ou des imitations de chocolat.

A la différence des sucres, l'amidon n'est pas sucré et ne fond pas en bouche et il est donc surprenant que les fourrages gras et les imitations de chocolat selon l'invention, ainsi que les produits de cuisson céréaliers en comprenant présentent des caractéristiques organoleptiques semblables, voire meilleures, que les produits conventionnels.

On peut utiliser tout type d'amidon, et notamment l'amidon de blé, l'amidon de maïs, l'amidon de maïs waxy, l'amidon de tapioca, l'amidon de riz, l'amidon de pomme de terre, ou leurs mélanges.

Avantageusement, on utilise de l'amidon natif, c'est-à-dire non cuit. Contrairement aux sirops de glucose, aux maltodextrines et aux protéines, l'amidon natif absorbe très peu la salive dans la bouche et n'augmente donc pas le collant du fourrage gras ou de l'imitation de chocolat. De plus, l'amidon natif étant un produit naturel non modifié, il ne fait pas partie des additifs alimentaires, qui doivent être signalés en tant que tels sur l'emballage du produit commercialisé.

En outre, l'amidon natif ne présente pas d'inconvénients digestifs, contrairement aux polyols qui ont un effet laxatif, ce qui est particulièrement indésirable dans des produits qui sont destinés aux enfants. Le fait qu'il soit non cuit rend l'amidon natif lentement digestible, ce qui permet de réduire l'index glycémique du fourrage gras ou de l'imitation de chocolat. Ainsi l'ajout d'amidon natif dans les fourrages gras et imitations de chocolat mis en oeuvre dans le produit de cuisson céréalier sec selon l'invention entraîne comme effet supplémentaire une sensation de satiété prolongée par rapport aux fourrages gras ou imitations de chocolat classiques.

En outre, la densité de l'amidon natif est élevée et ses granules ne présentent pas une porosité accessible à la matière grasse. Cette absence de porosité accessible est importante afin de ne pas augmenter la viscosité du fourrage gras ou de l'imitation de chocolat suite à une inclusion de matière grasse dans les pores.

La granulométrie des amidons natifs, qui est généralement comprise entre 2 µm et 100 µm, et plus généralement entre 5 µm à 45 µm, est également idéale pour une utilisation dans les fourrages gras ou les imitations de chocolat. Ainsi les amidons natifs ne comprennent ni trop de particules fines, ni trop de grosses particules. La présence de particules fines augmente la viscosité du fourrage gras ou de l'imitation de chocolat et nécessite donc d'augmenter la teneur en matières grasses. A l'inverse, la présence de grosses particules confère au fourrage gras ou à l'imitation de chocolat une sensation sableuse dans la bouche. L'équilibre entre granules de petite taille et de grande taille peut, en tant que de besoin, être ajusté en fonction des textures et propriétés recherchées, en mélangeant, en différentes proportions, des amidons de diverses provenances.

Dans un mode réalisation avantageux, la taille de particules de l'amidon est pour au moins 90% des particules comprise entre 2 µm et 100 µm, de préférence entre 5 µm et 45 µm.

Parmi les amidons natifs, on préfère l'amidon de blé, car il présente une granulométrie idéale de 2 µm à 45 µm, et car c'est un constituant naturel dans les produits de cuisson céréaliers, qui sont principalement à base de farine de blé, d'ailleurs souvent mélangée à de l'amidon de blé.

Les amidons de maïs et de manioc font aussi partie des amidons préférés de par leur granulométrie.

D'autres avantages de l'amidon natif sont sa saveur neutre et sa couleur blanche, ce qui permet son utilisation même dans des produits peu aromatiques, tels que les fourrages saveur vanille ou les imitations de chocolat blanc. Enfin, l'amidon natif est un ingrédient bon marché ; et il peut être employé sans broyage dans les fourrages gras et les imitations de chocolat, ce qui permet un process simplifié et une plus grande productivité.

Conformément à l'invention des amidons surséchés, c'est-à-dire des amidons, non cuits, dont la teneur en humidité a été amenée en dessous de leur humidité relative d'équilibre ne sont pas utilisés.

La teneur en amidon d'un fourrage gras ou d'une imitation de chocolat mis en oeuvre dans le produit de cuisson céréalier sec selon l'invention est de 3 % à 40 %, de préférence de 3 % à 28 %, et plus préférentiellement encore de 6 % à 25 % ou encore 8 à 18% en poids d'amidon par rapport au poids total du fourrage gras ou de l'imitation de chocolat. Dans un fourrage gras sucré ou une imitation de chocolat sucrée, on utilise de 3 % à 40%, de préférence de 3 à 35 %, avantageusement de 3 % à 25 %, de préférence de 6 à 25% et plus préférentiellement encore de 8 à 18 % en poids d'amidon par rapport au poids total du fourrage gras ou de l'imitation de chocolat. Les fourrages salés contiennent avantageusement de 10 % à 40 %, de préférence de 15 à 40% , de préférence de 15 à 30 %, et plus préférentiellement de 20 % à 30% en poids d'amidon par rapport au poids total du fourrage gras.

Dans certains fourrages gras ou imitations de chocolat mis en oeuvre dans le produit de cuisson céréalier sec selon l'invention, tout ou partie de l'amidon peut être amenée sous forme de farine native non cuite riche en amidon, par exemple une farine de céréale, telle que la farine de blé, de riz, de mais. La farine de blé peut être assimilée à un mélange de 12 % en poids de protéines, 83 % d'amidon à 13 % d'eau, de 1 % de matières grasses et de 4% de fibres.

Dans un mode de réalisation avantageux, on ajoute de 3 % à 30 %, de préférence de 3 % à 20 %, et plus préférentiellement de 5 % à 17% et plus avantageusement de 8 à 13% en poids de farine non cuite par rapport au poids total du fourrage gras ou de l'imitation de chocolat. De préférence, ces farines non cuites sont des farines de céréale.

Dans un autre mode de réalisation le fourrage gras ou imitation de chocolat est constitué(e) d'une suspension de particules solides dans une phase grasse continue, ladite suspension comprenant de 24 à 29% de matières grasses (MG) et de 3 % à 30 %, de préférence de 3 % à 20 %, et plus préférentiellement de 5 % à 17% et plus avantageusement de 8 % à 13 % en poids par rapport au poids total du fourrage gras ou de l'imitation de chocolat d'une farine, de préférence de céréale, non cuite et non surséchée .

L'amidon seul est cependant la version préférée par rapport à la version contenant de la farine seule ou de la farine et de l'amidon, car cela donne des produits un peu moins collants en bouche et un peu plus neutres en goût.

Il n'était pas évident de pouvoir utiliser un amidon (ou une farine) non surséché car l'amidon contient de l'eau, généralement de 13% à 20%, ce qui fait que l'introduction, dans une formulation, de 15% d'amidon de blé par exemple (contenant 13% d'eau) apporte environ 2% d'eau dans la formulation. Or, il est bien connu que l'addition d'une telle quantité d'eau directement sous forme libre, ou sous forme d'un miel ou d'un sirop de sucre par exemple, provoque la "solidification" du fourrage ou de l'imitation de chocolat, entraîné des risques de saponification en présence de MG lauriques notamment (très souvent utilisées dans les fourrages gras), et a pour conséquence le ramollissement du biscuit qui perd de son croustillant. De façon surprenante et inattendue, aucun de ces problèmes n'est rencontré lors de l'utilisation, conformément à l'invention, d'un amidon ou d'une farine dans les fourrages gras ou les imitations de chocolat.

Comme indiqué précédemment, l'ajout d'amidon dans le fourrage gras ou l'imitation de chocolat dans le produit de cuisson céréalier sec selon l'invention permet en outre de réduire la teneur en sucres et en matières grasses de ces produits.

Le fourrage gras ou l'imitation de chocolat contient de 24 % à 29 % MG, plus préférentiellement encore du point de vue nutritionnel de 24 à 27% MG, ou plus préférentiellement encore du point de vue organoleptique de 27% à 29% MG.

Des matières grasses appropriées sont les huiles végétales et plus particulièrement l'huile de palme et les matières grasses lauriques, l'huile de colza ou leurs mélanges ; ces huiles peuvent être natives ou au moins partiellement hydrogénées. Parmi les matières grasses lauriques on peut citer l'huile de coprah et l'huile de palmiste. Dans les imitations de chocolat on utilise par exemple l'huile de coprah totalement hydrogénée, l'huile de palmiste hydrogénée et fractionnée, l'huile hydrogénée et fractionnée de palme ou de soja. Dans le cas des fourrages gras, on utilise par exemple une matière grasse laurique partiellement ou totalement hydrogénée, un mélange de matières grasses lauriques hydrogénées et de palme natif, ou encore de l'huile de colza seule ou en mélange avec les huiles précitées. On pourrait également citer la matière grasse de cacao, même si économiquement ce n'est pas un choix intéressant et que techniquement elle n'est pas compatible avec n'importe quelle autre MG. Bref, on utilise les matières grasses bien connues de l'homme de l'art.

La nature de la ou des matières grasses utilisées influence notamment la dureté, le fondant et la température de fusion du fourrage ou de l'imitation de chocolat.

La teneur en sucres, de préférence en saccharose, des fourrages gras ou des imitations de chocolat mis en oeuvre dans le produit de cuisson céréalier sec selon l'invention est avantageusement de 0 à 55 %, de préférence de 0 à 49 %, et plus préférentiellement encore de 10 à 49 % en poids par rapport au poids total du fourrage ou de l'imitation de chocolat. Dans le cas des fourrages salés la teneur en sucres est généralement de 0 % à 55 %, de préférence de 0 à 35 %, et plus préférentiellement encore de 5 à 35 %,
et même de 5 à 25% et plus particulièrement de 10 à 15% en poids par rapport au poids total du fourrage. Les fourrages sucrés et les imitations de chocolat mis en oeuvre dans le produit de cuisson céréalier sec selon l'invention comprennent de préférence de 0 à 55 %, et plus préférentiellement encore de 0 à 49 %, et plus préférentiellement encore de 20 à 49 %, et même de 30 à 49% et plus particulièrement de 35 à 45% en poids par rapport au poids total du fourrage ou de l'imitation de chocolat.

Pour des fourrages sucrés et des imitations de chocolat mis en oeuvre dans le produit de cuisson céréalier sec selon l'invention peu sucrés destinés aux adultes, la teneur en sucre sera de 0 à 40%, de préférence de 10 à 40%, plus particulièrement 20 à 40% et même 25 à 35%.

On peut donc également envisager des fourrages gras ou des imitations de chocolat mis en oeuvre dans le produit de cuisson céréalier sec selon l'invention qui sont totalement dépourvus de sucres, la saveur sucrée pouvant être apportée par des édulcorants tels que les polyols, des édulcorants intenses ou leurs mélanges.

Les fourrages gras ou imitations de chocolat mis en oeuvre dans le produit de cuisson céréalier sec selon l'invention peuvent comprendre d'autres ingrédients que les matières grasses, les sucres et l'amidon. Ces ingrédients sont des ingrédients sous forme sèche et comprennent notamment les émulsifiants, le sel, les arômes, le lait et les dérivés laitiers, les différentes formes de cacao (de préférence la poudre de cacao dégraissée), du caramel, du malt, des garnitures, telles que des noisettes ou autres fruits secs broyés, des fibres alimentaires, des substituts de sucre et des levures ou leurs extraits.

Avantageusement, ces fourrages gras ou imitations de chocolat comprennent un ou plusieurs émulsifiants, notamment la lécithine, le phosphatide d'ammonium, le polyglycérol polyricinoléate (PGPR) ou leurs mélanges.

Les arômes peuvent être des arômes naturels ou synthétiques. Parmi les arômes naturels on peut citer la vanille, le caramel, la cannelle et parmi les arômes synthétiques la vanilline.

Les fourrages gras et imitations de chocolat mis en oeuvre dans le produit de cuisson céréalier sec selon l'invention peuvent être obtenus selon des procédés de fabrication classiques pour ces types de produits, qui sont bien connus de l'homme du métier. Les fourrages gras peuvent être légèrement aérés pendant la fabrication de façon à obtenir une densité de 800 g/l à 1250 g/l, de préférence de 1000 g/l à 1200 g/l. Un fourrage gras non aéré a une densité d'environ 1300 g/l.

La présente invention concerne également un produit de cuisson céréalier sec comportant un fourrage gras et/ou une imitation de chocolat tel que décrit ci-dessus.

Le produit de cuisson céréalier selon l'invention peut par exemple être un biscuit comportant au moins une couche de fourrage gras ou d'imitation de chocolat entre deux couches de biscuit sec.

Il peut également s'agir d'une gaufrette fourrée, dans laquelle au moins deux feuilles de gaufrette sont séparées par une couche de fourrage gras. De préférence, la gaufrette fourrée comporte 2 à 4 feuilles de gaufrettes séparées les unes des autres par une couche de fourrage gras.

Le produit de cuisson céréalier selon l'invention peut également comprendre un nappage à l'imitation de chocolat, ou une plaquette moulée d'imitation de chocolat sur au moins l'une de ses surfaces. La plaquette moulée d'imitation de chocolat peut par exemple être interposée entre deux couches de biscuits secs ou de gaufrettes.

Dans un mode de réalisation le produit de cuisson céréalier comporte un fourrage gras et un nappage à l'imitation de chocolat.

Enfin, le produit de cuisson céréalier selon l'invention peut également comprendre un fourrage gras ou une imitation de chocolat déposé(e) dans un biscuit creux, par exemple une tartelette ou une barquette. Eventuellement, le biscuit creux peut être rempli d'abord d'un fourrage gras puis d'une imitation de chocolat.

Généralement, le produit de cuisson céréalier selon l'invention comporte de 20 % à 50 %, avantageusement de 20 % à 40 %, de préférence de 25 % à 35 %, et plus préférentiellement encore soit de 25 % à 30 % pour un avantage nutritionnel supplémentaire ou soit de 28 à 35% pour un avantage organoleptique supplémentaire, en poids de fourrage et/ou d'imitation de chocolat par rapport au poids total du produit fini.

Le produit de cuisson céréalier selon l'invention comprend avantageusement de 13 % à 25 % en poids de matières grasses par rapport au poids total du produit de cuisson céréalier, de préférence de 13 à 21%, de façon encore plus préférable de 15 à 19% et même de 15 à 17%.

Après emballage hermétique, les produits de cuisson céréaliers selon l'invention se conservent au moins pendant 6 mois à 22°C.

Les exemples de réalisation suivants illustrent la présente invention, sans en limiter en aucune façon la portée.

### EXEMPLE 1 Fourrages aras saveur chocolat

On prépare sept fourrages gras saveur chocolat, dont un fourrage témoin qui correspond à un fourrage classique sans amidon, et six fourrages A, B1, B2, C1, C2 et D selon l'invention. Les compositions respectives de ces fourrages sont indiquées dans le tableau 1 ci-après.

Les fourrages sont fabriqués par simple mélange, pendant environ six minutes à 35°C, de tous les ingrédients dans un mélangeur planétaire jusqu'à l'obtention d'une pâte homogène. La densité est de 1180 g/l.

**Tableau 1**

| **Composition** | **Fourrage témoin** | **Fourrage A** | **Fourrage B1** | **Fourrage B2** | **Fourrage C1** | **Fourrage C2** | **Fourrage D** |
|---|---|---|---|---|---|---|---|
| Sucre glace | 52 | 38,5 | 43,5 | 43,5 | 48,1 | 48,1 | 46,7 |
| Huile de palme | 17,5 | 13 | 13,5 | 13,5 | 13,3 | 13,3 | 13 |
| Huile de coprah totalement hydrogénée | 17,5 | 13 | 13,5 | 13,5 | 13,3 | 13,3 | 13 |
| Poudre de cacao (10-12 % MG) | 13 | 13 | 13 | 13 | 15 | 15 | 20 |
| Farine de blé | 0 | 6 | 0 | 0 | 3 | 3 | 0 |
| Amidon de blé (13% d'eau) | 0 | 16 | 16 | 0 | 7 | 0 | 7 |
| Amidon de mais (13% d'eau) | 0 | 0 | 0 | 16 | 0 | 0 | 0 |
| Amidon de blé surseché (5% d'eau) | 0 | 0 | 0 | 0 | 0 | 7 | 0 |
| Lécithine | 0 | 0,3 | 0,3 | 0,3 | 0,3 | 0,3 | 0,3 |
| PGPR | 0 | 0,2 | 0,2 | 0,2 | 0 | 0 | 0 |
| Total | 100 | 100 | 100 | 100 | 100 | 100 | 100 |
| % en poids de matières grasses | 36,4 | 28 | 28,9 | 28,9 | 28,6 | 28,6 | 28,5 |
| % en poids de sucres | 52,1 | 38,6 | 43,6 | 43,6 | 48,2 | 48,2 | 46,8 |

La teneur en matières grasses ainsi que la teneur en sucres des fourrages A, B1, B2, C1, C2 et D selon l'invention est sensiblement réduite par rapport au fourrage témoin.

Malgré la réduction en sucres et en matière grasse, les fourrages A, B1, B2, C1, C2 et D selon l'invention présentent une saveur sucrée un peu plus faible, mais assez proche de celle du fourrage témoin. De plus, le goût chocolaté reste très proche du standard (sauf pour le D, qui est volontairement significativement plus cacaoté), de même que la texture en bouche (dureté, fondant, granulométrie, pâteux).

### EXEMPLE 2 Biscuits fourrés saveur chocolat

Des biscuits ronds sont cuites après laminage et découpage de la pâte crue et refroidis à 25°C selon un procédé standard. Ces biscuits connus de l'homme de l'art (biscuits de type "goûter") comprennent 10% de matières grasses (huile de palme), 18,4% de sucres (mono- et disaccharides, dont 16.9% de saccharose) 59% d'amidon, 6,9% de protéines, 3% de fibres et 1,5% d'eau.

Avec ces biscuits, on prépare 7 lots de biscuits fourrés, qui correspondent à des biscuits fourrés saveur chocolat classique, dont un lot de biscuits témoins comprenant le fourrage témoin de l'exemple 1, et six lots de biscuits fourrés A, B1, B2, C1, C2 et D selon l'invention comprenant respectivement le fourrage A, B1, B2, C1, C2 ou D de l'exemple 1.

Pour chaque lot de biscuits, le fourrage respectif de l'exemple 1 est déposé entre 2 biscuits ronds à une température de 30 à 40°C avec une déposeuse-sandwicheuse Sogem™, puis est refroidi à 20°C dans un tunnel de refroidissement ou en statique. Le fourrage gras ainsi cristallisé adhère aux 2 biscuits.

Les compositions respectives des sept lots de biscuits sont indiquées dans le tableau 2 ci-dessous.

**Tableau 2**

| **Composition** | **Biscuit témoin** | **Biscuit A** | **Biscuit B1** | **Biscuit B2** | **Biscuit C1** | **Biscuit C2** | **Biscuit D** |
|---|---|---|---|---|---|---|---|
| % en poids de fourrage gras | 35 | 35 | 32 | 32 | 28 | 28 | 35 |
| % de biscuit | 65 | 65 | 68 | 68 | 72 | 72 | 65 |
| % en poids de matières grasses | 19,3 | 16,3 | 16,1 | 16,1 | 15,3 | 15,3 | 16,5 |
| % en poids de sucres | 30,2 | 25,4 | 26,4 | 26,4 | 26,7 | 26,7 | 28,3 |
| % en poids d'amidon sec | 39 | 45,4 | 45,2 | 45,2 | 45,4 | 45,4 | 41,5 |
| % de calories lipidiques | 36,7 | 32,4 | 31,9 | 31,9 | 30,5 | 30,5 | 32,8 |

Les biscuits fourrés A, B1, B2, C1, C2 ou D selon l'invention ont un aspect strictement identique au témoin, le goût de biscuit et la texture croustillante du biscuit étant inchangés. Les essais sont perçus comme très proches du témoin en termes d'odeur, de sucré, de dureté du fourrage. Le fondant, la granulométrie et le pâteux sont très proches et n'ont pas été perçus comme significativement différents par un panel de consommateurs. La préférence globale n'est pas significativement différente.

Après emballage hermétique, les biscuits fourrés selon l'invention se conservent au moins pendant 6 mois à 22°C.

### EXEMPLE 3 : Imitations de chocolat

On prépare deux imitations de chocolat, dont une imitation de chocolat témoin qui correspond à une imitation de chocolat classique sans amidon, et une imitation de chocolat selon l'invention. Les compositions respectives de ces imitations de chocolat sont indiquées dans le tableau 3 ci-dessous.

Les imitations de chocolat sont fabriquées par un procédé chocolatier classique (pré-broyage entre 2 cylindres, puis broyage entre 5 cylindres et conchage 6H à 60°C. Cependant, l'amidon est ajouté directement en conche car il n'a pas besoin d'être broyé.

**Tableau 3**

| **Composition** | **Imitation de chocolat témoin** | **Imitation de chocolat invention** |
|---|---|---|
| Sucre glace | 41,9 | 44,45 |
| Lactose monohydrate | 10 | 0 |
| Huile de palmiste hydrogénée et fractionnée | 34 | 26,3 |
| Poudre de cacao (10-12 % MG) | 13 | 13 |
| Amidon de blé (13% d'eau) | 0 | 15 |
| Lécithine | 0,3 | 0,3 |
| PGPR | 0 | 0,15 |
| E492 | 0,8 | 0,8 |
| Total | 100 | 100 |
| % en poids de matières grasses | 36,5 | 29,0 |
| % en poids de sucres | 51,5 | 44,5 |

La teneur en matières grasses de l'imitation de chocolat selon l'invention est réduite de 20%, vs l'imitation de chocolat témoin, la teneur en sucres est réduite de 14%.

Cependant, la texture (croquante puis fondante ; granulométrie) est peu affectée ; la perception sucrée reste quasi équivalente à celle de l'imitation de chocolat témoin. Le produit est perçu légèrement plus cacaoté et légèrement plus amer.

### EXEMPLE 4 : Biscuits nappés

Des biscuits ronds sont cuits après laminage et découpage de la pâte crue et refroidis à 25 °C selon un procédé standard. Ces biscuits connus de l'homme de l'art comprennent 10% de matières grasses (huile de palme), 18,4% de sucres (mono- et disaccharides, dont 16,9% de saccharose), 59% d'amidon, 6,9% de protéines, 3% de fibres et 1,5% d'eau.

Avec ces biscuits on prépare 2 lots de biscuits nappés, dont un lot de biscuits témoins comprenant un nappage à l'imitation de chocolat témoin de l'exemple 3, qui correspondent à des biscuits nappés saveur chocolat classique et un lot de biscuits comprenant un nappage à l'imitation de chocolat selon l'invention de l'exemple 3.

Les compositions respectives des deux lots de biscuits sont indiquées dans le tableau 4 ci-dessous.

**Tableau 4**

| **Composition** | **Imitation de chocolat témoin** | **Imitation de chocolat invention** |
|---|---|---|
| % en poids d'imitation de chocolat | 30 | 30 |
| % de biscuit | 70 | 70 |
| % en poids de matières grasses | 18.0 | 15.7 |
| % en poids de sucres | 28.3 | 26.2 |
| % en poids d'amidon sec | 41.8 | 45.8 |
| % de calories lipidiques | 34.7 | 31.3 |

Les biscuits nappés à l'imitation de chocolat selon l'invention ont un aspect strictement identique au témoin, le goût de biscuit et la texture croustillante globale sont inchangés. Les essais sont perçus comme très proches du témoin en terme d'odeur, de sucré, de goût chocolat et de fondant ; la granulométrie et le pâteux sont équivalents.

Après emballage hermétique, les biscuits nappés selon l'invention se conservent au moins pendant 6 mois à 22°C.

## Revendications

1. Produit de cuisson céréalier sec comprenant un fourrage gras ou imitation de chocolat constitué d'une suspension de particules solides dans une phase grasse continue, ladite suspension comprenant 24 à 29% de matières grasses (MG) et de 3% à 40% d'au moins un amidon natif, non surséché, ces pourcentages étant exprimés en poids pour poids.

2. Produit de cuisson céréalier sec comprenant un fourrage gras ou imitation de chocolat constitué d'une suspension de particules solides dans une phase grasse continue, ladite suspension comprenant 24 à 29% de matières grasses (MG) et 3% à 30%, préférablement 3% à 20%, et plus préférablement 5% à 17% and plus avantageusement 8% à 13% en poids par rapport au poids total du fourrage gras ou imitation de chocolat d'une farine, de préférence de céréale, non cuite et non surséchée.

3. Produit de cuisson céréalier selon la revendication 1 ou 2, **caractérisé en ce que** l'amidon est choisi dans le groupe constitué par l'amidon de blé, l'amidon de maïs, l'amidon de maïs waxy, l'amidon de tapioca, l'amidon de riz, l'amidon de pomme de terre ou leurs mélanges.

4. Produit de cuisson céréalier selon la revendication 3, **caractérisé en ce que** l'amidon est de l'amidon de blé.

5. Produit de cuisson céréalier selon l'une quelconque des revendications 1 à 4, **caractérisé en ce qu'**au moins 90% des particules d'amidon ont une taille comprise entre 2 µm et 100 µm, préférablement entre 5µm et 45 µm.

6. Produit de cuisson céréalier selon l'une quelconque des revendications 1 à 5, **caractérisé en ce que** la suspension comprend au moins un émulsifiant.

7. Produit de cuisson céréalier selon la revendication 6, **caractérisé en ce que** l'émulsifiant est choisi dans le groupe consistant en la lécithine, le phosphatide d'ammonium, le polyglycérol polyricinoléate (PGPR) ou leurs mélanges.

8. Produit de cuisson céréalier selon l'une quelconque des revendications 1 à 7, **caractérisé en ce que** la suspension comprend entre 0 et 55% de sucres, de préférence saccharose, en poids par rapport au poids total du fourrage ou de l'imitation de chocolat.

9. Produit de cuisson céréalier selon la revendication 8, **caractérisé en ce que** la teneur en sucres du fourrage gras ou de l'imitation de chocolat est de 10 à 49% en poids par rapport au poids total du fourrage ou de l'imitation de chocolat.

10. Produit de cuisson céréalier selon l'une quelconque des revendications 1 à 9, **caractérisé en ce que** la suspension comprend du sel.

11. Produit de cuisson céréalier selon l'une quelconque des revendications 1 à 10, **caractérisé en ce que** la suspension comprend un ou plusieurs arômes.

12. Produit de cuisson céréalier selon l'une des revendications précédentes, **caractérisé en ce qu'**il s'agit d'un biscuit comportant au moins une couche de fourrage gras ou d'imitation de chocolat entre deux couches de biscuit sec.

13. Produit de cuisson céréalier selon l'une quelconque des revendications précédentes, **caractérisé en ce qu'**il comporte sur au moins l'une de ses surfaces une couche d'imitation de chocolat.

14. Produit de cuisson céréalier selon l'une quelconque des revendications précédentes, **caractérisé en ce qu'**il comporte un fourrage gras ou une imitation de chocolat disposé(e) dans un biscuit creux, ledit biscuit creux pouvant être rempli d'abord d'un fourrage gras puis d'une imitation de chocolat.

15. Produit de cuisson céréalier selon l'une quelconque des revendications précédentes, **caractérisé en ce qu'**il comporte 20% à 50% en poids de fourrage et/ou d'imitation de chocolat par rapport au poids total du produit fini.

16. Produit de cuisson céréalier selon l'une quelconque des revendications précédentes, **caractérisé en ce qu'**il comprend de 13% à 25% en poids de matières grasses par rapport au poids total du produit de cuisson céréalier fini, de préférence de 13 à 21%, de façon encore plus préférable de 15 à 19% et même de 15 à 17%.

## Patentansprüche

1. Trockenes Getreidebackprodukt umfassend eine Fettfüllung oder eine Schokoladennachahmung, bestehend aus einer Suspension fester Teilchen in einer kontinuierlichen Fettphase, wobei die Suspension 24 bis 29% Fettsubstanzen (MG) und von 3% bis 40% mindestens einer natürlichen nicht übertrockneten Stärke umfasst, wobei diese Prozentangaben als Gewicht pro Gewicht ausgedrückt sind.

2. Trockenes Getreidebackprodukt umfassend eine Fettfüllung oder eine Schokoladennachahmung, bestehend aus einer Suspension fester Teilchen in einer kontinuierlichen Fettphase, wobei die Suspension 24 bis 29% Fettsubstanzen (MG) und von 3 Gew.-% bis 30 Gew.-%, vorzugsweise 3 Gew.-% bis 20 Gew.-% und stärker bevorzugt 5 Gew.-% bis 17 Gew.-% und noch stärker bevorzugt 8 Gew.-% bis 13 Gew.-%, bezogen auf das Gesamtgewicht der Fettfüllung oder der Schokoladenachahmung, eines ungebackenen und nicht übertrockneten Mehls, vorzugsweise Getreidemehls, umfasst.

3. Getreidebackprodukt nach Anspruch 1 oder 2, **dadurch gekennzeichnet, dass** die Stärke aus der Gruppe ausgewählt ist, bestehend aus Weizenstärke, Maisstärke, wachsartiger Maisstärke, Tapiocastärke, Reisstärke, Kartoffelstärke oder einer Mischung davon.

4. Getreidebackprodukt nach Anspruch 3, **dadurch gekennzeichnet, dass** die Stärke Weizenstärke ist.

5. Getreidebackprodukt nach einem der Ansprüche 1 bis 4, **dadurch gekennzeichnet, dass** mindestens 90% der Stärketeilchen eine Größe zwischen 2 µm und 100 µm, vorzugsweise zwischen 5 µm und 45 µm, aufweisen.

6. Getreidebackprodukt nach einem der Ansprüche 1 bis 5, **dadurch gekennzeichnet, dass** die Suspension mindestens einen Emulgator umfasst.

7. Getreidebackprodukt nach Anspruch 6, **dadurch gekennzeichnet, dass** der Emulgator aus der Gruppe ausgewählt ist, bestehend aus Lecithin, Ammoniumphosphatid, Polyglycerin-Polyricinoleat (PGPR) oder einer Mischung davon.

8. Getreidebackprodukt nach einem der Ansprüche 1 bis 7, **dadurch gekennzeichnet, dass** die Suspension zwischen 0 und 55 Gew.-% Zucker, vorzugsweise Saccharose, bezogen auf das Gesamtgewicht der Füllung oder der Schokoladennachahmung, umfasst.

9. Getreidebackprodukt nach Anspruch 8, **dadurch gekennzeichnet, dass** der Zuckergehalt der Fettfüllung oder der Schokoladennachahmung von 10 bis 49 Gew.-%, bezogen auf das Gesamtgewicht der Füllung oder der Schokoladennachahmung, beträgt.

10. Getreidebackprodukt nach einem der Ansprüche 1 bis 9, **dadurch gekennzeichnet, dass** die Suspension Salz umfasst.

11. Getreidebackprodukt nach einem der Ansprüche 1 bis 10, **dadurch gekennzeichnet, dass** die Suspension ein oder mehrere Aromen umfasst.

12. Getreidebackprodukt nach einem der vorhergehenden Ansprüche, **dadurch gekennzeichnet, dass** es sich um einen Keks handelt, der mindestens eine Schicht einer Fettfüllung oder einer Schokoladennachahmung zwischen zwei trockenen Keksschichten enthält.

13. Getreidebackprodukt nach einem der vorhergehenden Ansprüche, **dadurch gekennzeichnet, dass** es auf mindestens einer seiner Oberflächen eine Schicht einer Schokoladennachahmung enthält.

14. Getreidebackprodukt nach einem der vorhergehenden Ansprüche, **dadurch gekennzeichnet, dass** es eine Fettfüllung oder eine Schokoladennachahmung enthält, die in einen hohlen Keks eingebracht ist, wobei der hohle Keks zuerst mit einer Fettfüllung und dann mit einer Schokoladenachahmung gefüllt werden kann.

15. Getreidebackprodukt nach einem der vorhergehenden Ansprüche, **dadurch gekennzeichnet, dass** es 20 Gew.-% bis 50 Gew.-% Füllung und/oder Schokoladennachahmung, bezogen auf das Gesamtgewicht des Endprodukts, enthält.

16. Getreidebackprodukt nach einem der vorhergehenden Ansprüche, **dadurch gekennzeichnet, dass** es von 13 Gew.-% bis 25 Gew.-% Fettsubstanzen, bezogen auf das Gesamtgewicht des Getreidebackendprodukts, vorzugsweise von 13 bis 21 %, noch stärker bevorzugt von 15 bis 19% und sogar von 15 bis 17%, enthält.

## Claims

1. Dry cereal-based bakery product comprising a fat filling or chocolate substitute constituted by a suspension of solid particles in a continuous fat phase, said suspension comprising 24 to 29% edible fats (EF) and 3% to 40% of at least one native, non-overdried starch, these percentages being expressed as weight for weight.

2. Dry cereal-based bakery product comprising a fat filling or chocolate substitute constituted by a suspension of solid particles in a continuous fat phase, said suspension comprising 24 to 29% edible fats (EF) and 3% to 30%, preferably 3% to 20%, and more preferably 5% to 17% and more advantageously 8% to 13% by weight with respect to the total weight of the fat filling or of the chocolate substitute of a non-overdried, uncooked flour, preferably cereal.

3. Cereal-based bakery product according to claim 1 or 2, **characterized in that** the starch is chosen from the group constituted by wheat starch, maize starch, waxy maize starch, tapioca starch, rice starch, potato starch, or their mixtures.

4. Cereal-based bakery product according to claim 3, **characterized in that** the starch is wheat starch.

5. Cereal-based bakery product according to any one of claims 1 to 4, **characterized in that** at least 90% of the starch particles have a particle size comprised between 2 µm and 100 µm, preferably between 5 µm and 45 µm.

6. Cereal-based bakery product according to any one of claims 1 to 5, **characterized in that** the suspension comprises at least one emulsifier.

7. Cereal-based bakery product according to claim 6, **characterized in that** the emulsifier is chosen from the group consisting of lecithin, ammonium phosphatide, polyglycerol polyricinoleate (PGPR) or their mixtures.

8. Cereal-based bakery product according to any one of claims 1 to 7, **characterized in that** the suspension comprises between 0 and 55% sugars, preferably saccharose, by weight with respect to the total weight of the filling or the chocolate substitute.

9. Cereal-based bakery product according to claim 8, **characterized in that** the sugar content of the fat filling or the chocolate substitute is 10 to 49% by weight with respect to the total weight of the filling or the chocolate substitute.

10. Cereal-based bakery product according to any one of claims 1 to 9, **characterized in that** the suspension comprises salt.

11. Cereal-based bakery product according to any one of claims 1 to 10, **characterized in that** the suspension comprises one or more flavourings.

12. Cereal-based bakery product according to any one of the preceding claims, **characterized in that** it is a biscuit comprising at least one layer of fat filling or chocolate substitute between two layers of dry biscuit.

13. Cereal-based bakery product according to any one of the preceding claims, **characterized in that** it comprises a layer of chocolate substitute on at least one of its surfaces.

14. Cereal-based bakery product according to any one of the preceding claims, **characterized in that** it comprises a fat filling or a chocolate substitute placed in a hollow biscuit, said hollow biscuit being able to be filled firstly with a fat filling then with a chocolate substitute.

15. Cereal-based bakery product according to any one of the preceding claims, **characterized in that** it comprises 20% to 50% by weight filling and/or chocolate substitute with respect to the total weight of the finished product.

16. Cereal-based bakery product according to any one of the preceding claims, **characterized in that** it comprises 13% to 25% by weight edible fats with respect to the total weight of the finished cereal-based bakery product, preferably 13 to 21%, even more preferably 15 to 19% and even 15 to 17%.
